# EUROPÄISCHE PATENTSCHRIFT

(11) **EP 1 257 753 B1**
(45) Veröffentlichungstag und Bekanntmachung des Hinweises auf die Patenterteilung: **03.11.2004**
(21) Anmeldenummer: 01902416.5
(22) Anmeldetag: 06.02.2001
(51) Int. Cl.: F16J 15/02, F16J 15/12, F16L 25/00, F16K 5/06

(54) **DICHTUNGSANORDNUNG**
SEALING SYSTEM
ENSEMBLE D'ETANCHEITE

(30) Priorität: 23.02.2000 DE 20003198 U; 11.05.2000 DE 20008526 U
(43) Veröffentlichungstag der Anmeldung: 20.11.2002
(73) Patentinhaber: Xomox International GmbH & Co., 88131 Lindau (DE)
(72) Erfinder: GONSIOR, Wolfgang, D-88131 Bodolz (DE)
(74) Vertreter: Schmitt, Meinrad, Dipl.-Ing.
(86) Internationale Anmeldenummer: PCT/EP2001/001248
(87) Internationale Veröffentlichungsnummer: WO 2001/063152

(56) Entgegenhaltungen:
- DE-A- 19 747 266
- DE-C- 503 769
- DE-U- 20 008 526
- US-A- 3 869 132
- US-A- 4 779 903

## Beschreibung

Die Erfindung bezieht sich auf eine Dichtungsanordnung gemäß der im Oberbegriff des Patentanspruchs 1 angegebenen Merkmale.

Aus der DE 503 769 C ist eine derartige Dichtungsanordnung mit einem ersten, radial außen angeordneten Dichtring und einem zweiten, radial innen liegenden Dichtring bekannt, welche in einer Kammer der miteinander zu verbindenden Bauteile angeordnet wird. Zwischen den beiden Dichtringen ist ein Verbindungsstück angeordnet, welches eine Trennwand bildet und insbesondere als ein doppelt T-förmiger Ring mit seitlichen Flanschen ausgebildet ist. Bei der Herstellung der Verbindung der beiden Bauteile werden die seitlichen Flansche der Trennwand umgebogen und die Dichtringe in die Kammer eingepresst, wobei die Trennwand im Übrigen ihre Form beibehält. Im Brandfalle können die beiden aus einem Weichdichtungswerkstoff bestehenden Dichtringe beschädigt oder zerstört werden, so dass nachfolgend die Abdichtung nicht mehr gewährleistet werden kann.

Ferner sind Dichtungsanordnungen bekannt, deren Dichtringe bei feuersicherer oder sogenannter "Fire Safe" Ausbildung als Metall-Graphit-Dichtung ausgeführt ist. Um der Anforderung dahingehend zu entsprechen, dass der zumindest teilweise aus Graphit oder einem vergleichbaren Hochtemperatur-Dichtungswerkstoff bestehende erste Dichtring nicht mit dem durch die Bauteile strömende Medium in Berührung gelangen kann. wird zur Seite des Mediums hin eine zweite Dichtung vorgesehen, wodurch ein hoher Platzbedarf bedingt ist. Desweiteren können zuätzliche metallische Dichtungen vorgesehen sein, welche einen erheblichen Aufwand erfordern und eine relativ hohe Leckrate aufweisen.

Hiervon ausgehend liegt der Erfindung die Aufgabe zugrunde, die Dichtungsanordnung der genannten Art dahingehend weiterzubilden, daß mit geringem Fertigungsaufwand und/oder Montageaufwand eine funktionssichere Abdichtung gewährleistet ist. Die Dichtungsanordnung soll einen geringen Platzbedarf aufweisen und keine zusätzlichen Teile oder Bearbeitungsvorgänge erfordern. Ferner soll die Dichtungsanordnung sowohl die Anforderungen an die Feuersicherheit erfüllen als auch hinsichtlich Einwirkungen des durch die Bauteile strömenden Mediums resistent. vor allem chemisch-resistent sein.

Die Lösung dieser Aufgabe erfolgt gemäß den im Patentanspruch 1 angegebenen Merkmalen.

Die erfindungsgemäße Dichtungsanordung zeichnet sich bei einfacher Konstruktion durch eine hohe Funktionssicherheit aus und erfordert einen extrem geringen Platzbedarf. Dem ersten Dichtring ist zur Mediumseite hin ein zweiter weichdichtender Dichtring zugeordnet, wobei zwischen den genannten Dichtringen eine Trennwand, insbesondere in Form eines Metallringes, angeordnet ist. Es ist somit ein Dichtelement in Sandwich-Bauform geschaffen, welches bevorzugt als Flachdichtung ausgebildet ist und einbaufertig in die Kammer einsetzbar ist, wobei die Trennwand bei der Herstellung der Verbindung zwischen den Bauteilen eingespannt und derart deformiert wird. daß auf den ersten Dichtring eine Volumenreduzierung und somit eine Verpressung und Kammerung des ersten Dichtringes erfolgt. Auf den ersten Dichtring wird mittels des Metallringes eine insbesondere radial wirkende Vorspannung erzeugt, welche auch bei einer Beschädigung oder Zerstörung, insbesondere infolge Feuereinwirkung, des zweiten Dichtringes erhalten bleibt, so daß eine sichere Abdichtung nach außen gewährleistet ist. Die Trennwand weist eine wesentlich größere Steifigkeit als der erste Dichtring auf, welcher somit unabhängig von dem zweiten weichdichtenden Dichtring immer funktionssicher von der Trennwand abgestützt ist und in der erforderlichen Weise in der mittels der Trennwand abgetrennten Teilkammer vorgespannt und/oder verpreßt ist. Die Verformung der Trennwand bzw. des Metallringes während der Montage wird dadurch erreicht. daß Anlageflächen der Trennwand sowohl an einer Kammerwand des einen Bauteils als auch an einer Kammerwand des anderen Bauteils anliegen, wobei der Abstand dieser Kammerwände während der Montage und/oder der Herstellung der Verbindung der Bauteile reduziert wird. Die Trennwand ist in zweckmäßiger Weise derart vorgeformt. daß der den ersten Dichtring enthaltene Kammerteil während der Montage auch mittels der Trennwand in seinem Volumen verändert und vorzugsweise zur Verpressung des ersten Dichtringes reduziert wird. Das erfindungsgemäße Dichtelement besitzt eine Doppelfunktion. nämlich feuersichere und chemisch resistente Abdichtung. Es wird ein extrem geringer Platzbedarf benötigt und ferner eine kostengünstige Lösung erreicht. ohne zusätzliche Teile oder Bearbeitungsvorgänge.

Auf der anderen Seite der Trennwand ist der weichdichtende zweite Dichtring angeordnet. welcher insbesondere aus PTFE. Elastomer oder einem ähnlichen Werkstoff besteht. Das erfindungsgemäße Dichtelement ist als ein vorgefertigtes Bauteil ausgebildet und ist in ein und derselben Kammer angeordnet, welche aus Vorsprüngen. Nut-Feder-Anordnungen oder dergleichen der beiden Bauteile gebildet wird. Bezogen auf den ersten Dichtring und die Trennwand ist der zweite weichelastische Dichtring mediumseitig angeordnet und verhindert somit eine Mediumberührung der Trennwand sowie des ersten Dichtrings. Wird der erste Dichtring durch Feuereinwirkung oder andere äußere Einflüsse zerstört, so wird erfindungsgemäß mittels der zwischen den Bauteilen eingespannten, ringförmigen Trennwand die Kammerung des ersten Dichtringes gleichwohl aufrechterhalten und somit auch dann eine sichere Abdichtung nach außen gewährleistet. Im normalen Betriebszustand verhindert der zweite Dichtring aus PTFE oder einem anderen Weichdichtunaswerkstoff den Mediumkontakt mit dem ersten Dichtring aus Graphit oder einem anderen Hochtemperatur-Dichtungswerkstoff. Die drei Ringe bilden in vorteilhafter Weise ein vorgefertigtes und/oder integrales Dichtelement, welches zur Montage in eine einzige Kammer eingesetzt wird, wobei die zwischen dem ersten und dem zweiten Dichtring liegende ringförmige Trennwand bei der Montage und Verbindung der Bauteile zwischen diesen eingespannt und derart weiterverformt wird, daß eine Verpressung und gleichzeitig eine komplette Kammerung des ersten Dichtringes erfolgt. Zur Erhöhung der Steifigkeit enthält die Trennwand bevorzugt eine Rippe, welche insbesondere in die Teilkammer des ersten Dichtringes hineinragt. Die Rippe ist bevorzugt durch die Verformung der Trennwand, insbesondere durch Ausbeulen und/oder Stauchen beim Einbau gebildet. Die Rippe ist integraler Bestandteil der Trennwand, welche in Richtung der Längsachse in bevorzugter Weise eine im wesentlichen gleichbleibende Dicke aufweist und/oder näherungsweise dreieckartig deformiert ist.

In der erfindungsgemäßen Dichtungsanordnung sind die genannten drei Ringe in vorteilhafter Weise koaxial zueinander angeordnet, wobei der erste Dichtring als Außenring und der zweite Dichtung als Innenring ausgebildet ist, zwischen welchen die vorteilhaft vorgeformte Trennwand angeordnet ist. Hierbei ist die axiale Breite des zweiten Dichtringes oder Innenringes in vorteilhafter Weise kleiner als die axiale Breite des Metallringes und/oder des ersten Dichtringes oder Außenringes. Während der Montage wird der Abstand zwischen den axial einander gegenüberliegenden Kammerwänden der beiden Bauteile reduziert und nach Abschluß der Montage sind die beiden Dichtringe fest in der Kammer unter Vorspannung eingepreßt, wobei die Trennwand mit den oben erwähnten Anlageflächen unter Vorspannung an den axial gegenüberliegenden und/oder im wesentlichen in Radialebenen liegenden Kammerwänden dicht und/oder unter Vorspannung anliegt.

Weiterbildungen und besondere Ausgestattungen der Erfindung sind in der nachfolgenden Beschreibung eines Ausführungsbeispiels angegeben. Die Dichtunasanordnung getangt bevorzugt in Ventilen. Höhnen oder Klappen zum Einsatz. wobei die genannten Bauteile insbesondere deren Gehäuseteile sind. Es sei festgehalten, daß die erfindungsgemäße Dichtungsanordnung für Bauteile unterschiedlicher Ausgestaltung, zum Einsatz gelangen kann, seien es Rohrteile, Gehäuseteile oder dergleichen.

Die Erfindung wird nunmehr anhand eines besonderen als Kugelhahn ausgebildeten Ausführungsbeispiels näher erläutert. ohne daß insoweit eine Beschränkung erfolgt.

Es zeigen:
- Fig. 1: einen axialen Längsschnitt durch einen Kugelhahn mit der erfindungsgemäßen Dichtungsanordnung zwischen den als zwei Gehäuseteilen ausgebildeten Bauteilen,
- Fig. 2: vergrößert das Detail X gemäß Fig. 1,
- Fig. 3: teilweise einen axialen Schnitt durch das erfindungsgemäße integrale Dichtelement vor der Montage bzw. vor dem Einspannen zwischen die Bauteile,
- Fig. 4: das Dichtelement nach der Montage.

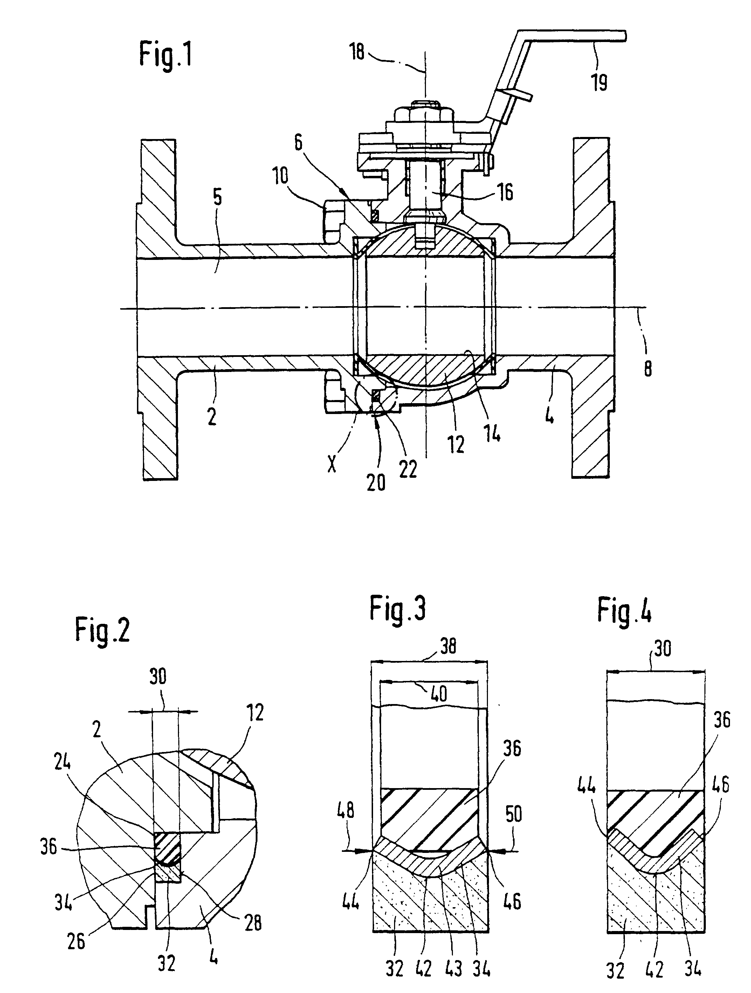

Gemäß Fig. 1 sind zwei Bauteile 2, 4 beispielshaft als Gehäuseteile eines Kugelhahns, enthaltend einen von einem Medium durchströmbaren Innenraum 5 ausgebildet und über eine Flanschverbindung 6 miteinander verbunden, wobei in bekannter Weise über den Umfang verteilt, und zwar bezogen auf eine Längsachse 8, eine Anzahl von Schrauben 10 vorgesehen ist. Im Gehäuseteil 4 ist eine Ventilkugel 12 mit einer Durchgangsöffnung 14 mittels eines Schaftes 16 um eine Drehachse 18 drehbar gelagert. Zur Betätigung des Kugelventils ist mit dem Schaft 16 ein Hebel 19 drehfest gekoppelt, wobei durch Drehung des Hebels um 90° die Ventilkugel 12 aus der dargestellten Durchgangsposition in die Absperrposition drehbar ist. in welcher die Achse der Durchgangsöffnung 14 quer zur Längsachse 8 angeordnet ist. Im Verbindungsbereich 20 der beiden Gehäuse- bzw. Bauteile 2, 4 ist ein ringförmiges Dichtelement 22 in einer Kammer zwischen den beiden Bauteilen 2, 4 angeordnet.

Gemäß Fig. 2 wird die Kammer 24 einerseits durch eine Ringnut 24 im Bauteil 4 und andererseits durch einen Ringbund im Bauteil 2 gebildet. Die Kammer 24 besitzt einen im wesentlichen rechteckförmigen Querschnitt, wobei zwei diametrale und axial beabstandete Kammerwände 26, 28 vorhanden sind. Desweiteren wird die Kammer 24 von zwei diametralen und radial beabstandeten Kammerwänden der Bauteile 2 bzw. 4 begrenzt. Im montierten Zustand der Bauteile 2, 4 weisen die Kammerwände 26, 28 einen axialen Abstand 30 zueinander auf. In der Kammer 24 ist das als Flachdichtung in Sandwich-Bauform ausgebildete, erfindungsgemäße Dichtelement angeordnet, welches einen ersten Dichtring 32, eine als Metallring 34 ausgebildete Trennwand und einen zweiten Dichtring 36 enthält. Der erste Dichtring 32 besteht insbesondere aus Graphit odereinem vergleichbaren Hochtemperatur-Dichtungswerkstoff und der zweite Dichtring 36 ist als Weichdichtung. insbesondere aus PTFE. Elastomer oder einem anderen Weichdichtungswerkstoff. Der zweite Dichtring 36 ist in Richtung von der Kugel 12 wegweisend, welche dem vom Medium des Kugelventils durchströmbaren Innenraum 5 zugeordnet ist, vor dem Metallring 34 und dem ersten Dichtring 32 angeordnet. Mittels des zweiten Dichtringes 36 wird folglich der erste Dichtring 32 ebenso wie die Trennwand 34 bzw. der Metallring vor dem Einwirken des Mediums sicher geschützt. In diesem besonderen Ausführungsbeispiel sind der erste Dichtring 32, der Metallring 34 und der zweite Dichtring 36 koaxial. und zwar bezogen auf die Längsachse 8 der beiden Bauteile 2. 4 bzw. des Kugelventils angeordnet. Der erste Dichtring 32 bildet einen Außenring und der zweite Dichtring 36 einen Innenring. wobei radial dazwischen der Metallring 34 angeordnet ist.

Fig. 3 zeigt das Dichtelement vor der Montage bzw. vor dem Einspannen in die oben erläuterte Kammer zwischen den Bauteilen. Im Vergleich mit der axialen Breite 38 des ersten Dichtringes 32 ist die axiale Breite 40 des Innenringes oder zweiten Dichtringes 36 um einen vorgegebenen Betrag kleiner. Die radiale Dicke des Metallrings 34 ist über die axiale Länge im wesentlichen konstant. Der Metallring 34 ist V-förmig vorgeformt und besitzt eine insbesondere radial nach außen weisende Rippe 43 mit einer Spitze oder Abrundung 42. welche dem ersten Dichtring 32 zugewandt ist. Ferner enthält der Metallring 34 diametral angeordnete, axial voneinander beabstandet angeordnete Anlageflächen 44. 46 zur Anlage an die oben erwähnten, axial gegenüberliegenden Kammerwände der beiden Bauteile. Zur Montage wird das erfindungsgemäß einbaufertig vorgeformte, integrale Dichtelement in die Kammer eingesetzt und während der Montage bzw. beim Herstellen der Verbindung der beiden Bauteile wirken axiale Kräfte in Richtung der Pfeile 48. 50 auf den Metallring 34. Hierbei erfolgt eine weitere Verformung des Metallringes 34 derart, daß die Spitze oder Abrundung 42 sowie die axial zu beiden Seiten anschließenden Teilbereiche des Metallringes 34 radial nach außen deformiert wird. Bei der Montage erfolgt somit eine Vorspannung bzw. Verpressung des ersten Dichtringes 32 und darüber hinaus erfindungsgemäß eine Kammerung mittels des Metallringes 34. Bei der Montage werden die genannten Kammerwände soweit aufeinander zubewegt, daß schließlich auch der weichdichtende zweite Dichtring 36 dichtend, vorteilhaft unter Vorspannung. an den genannten axial gegenüberliegenden Kammerwänden anliegt. Es sei ausdrücklich festgehalten, daß die Kammer derart dimensioniert ist. daß nach Abschluß der Montage die beiden Dichtringe 32. 36 in radialer Richtung in vorteilhafter Weise auch an den radial gegenüberliegenden Kammerwänden der Bauteile anliegen.

Fig. 4 zeigt das Dichtelement nach Abschluß der Montage, wobei im Vergleich mit Fig. 3 die Deformation des im Querschnitt V-förmigen Metallringes 34 gut zu erkennen ist. Ersichtlich liegt der Metallring 34 mit seinen Anlageflächen 44. 46 unter axialer Vorspannung dicht an den axial gegenüberliegenden Kammerwänden an, wobei die axiale Breite des Dichtelements dem anhand von Fig. 2 erläuterten Abstand 30 der genannten Kammerwände entspricht. Der Metallring 34 bildet für den ersten Dichtring 32 die Trennwand zur Mediumseite hin, so daß bei einer Beschädigung oder Zerstörung des zweiten Dichtringes 36. insbesondere infolge einer Feuereinwirkung, die Kammerung des ersten Dichtringes 32 unverändert aufrechterhalten bleibt und folglich die sichere Abdichtung nach außen gewährleistet ist.

### Bezugszeichen

- 2. 4: Bauteil. Gehäuseteil
- 5: Innenraum
- 6: Flanschverbindung
- 8: Längsachse
- 10: Schraube
- 12: Ventilkugel
- 14: Durchgangsbohrung
- 16: Schaft
- 18: Drehachse
- 19: Hebel
- 20: Verbindungsbereich
- 22: Dichtelement
- 24: Kammer
- 26, 28: Kammerwand
- 30: Abstand zwischen 26 und 28
- 32: erster Dichtring / Außenring
- 34: Metallring
- 36: zweiter Dichtring / Innenring
- 38: Breite von 32
- 40: Breite von 36
- 42: Spitze / Abrundung von 34
- 43: Rippe
- 44, 46: Anlagefläche von 34
- 48, 50: Pfeil

## Patentansprüche

1. Dichtungsanordnung, enthaltend einen ersten, radial außen angeordneten Dichtring (32), eine Kammer (24) zwischen zwei miteinander verbindbaren Bauteilen (2, 4), welche einen von einem Medium durchströmbaren Innenraum (5) enthalten und welche bevorzugt über eine Flanschverbindung miteinander verbunden sind, wobei der genannte Dichtring (32) in der Kammer (24) unter Vorspannung angeordnet ist, sowie enthaltend eine Trennwand (34), welche in der Kammer (24) in Richtung vom Innenraum (5) wegweisend vor dem ersten Dichtring (32) angeordnet ist und an deren vom Innenraum(5) abgewandten Seite der erste Dichtring (32) abgestützt ist, wobei in Richtung vom Innenraum (5) wegweisend vor der Trennwand (34) ein zweiter Dichtring (36) aus einem Weichdichtungswerkstoff, insbesondere PTFE, angeordnet ist,
**dadurch gekennzeichnet, dass** der erste radial außen angeordnete Dichtring (32) aus einem Hochtemperatur-Dichtungswerkstoff besteht, dass durch die Herstellung der Verbindung zwischen den Bauteilen (2, 4) die Trennwand (34) derart radial verformt wird, dass der den ersten Dichtring (32) enthaltende Kammerteil auch mittels der Trennwand (34) in seinem Volumen verändert wird und dadurch auf den ersten Dichtring (32) eine radiale Vorspannung wirkt, und dass im montierten Zustand die beiden Dichtringe (32,36) unmittelbar an den im wesentlichen in Radialebenen liegenden Kammerwänden (26,28) anlegbar sind.

2. Dichtungsanordnung nach Anspruch 1, **dadurch gekennzeichnet, dass** die Trennwand (34) eine im Vergleich mit dem Werkstoff des ersten Dichtringes (32) wesentlich höhere Steifigkeit aufweist und/oder als Metallring ausgebildet ist, wobei mittels der Trennwand (34) eine Kammerung des ersten Dichtringes (32) vorgegeben ist.

3. Dichtungsanordnung nach Anspruch 1 oder 2, **dadurch gekennzeichnet, dass** der erste Dichtring (32) aus Graphit besteht.

4. Dichtungsanordnung nach einem der Ansprüche 1 bis 3, **dadurch gekennzeichnet, dass** die Trennwand (34) zwischen zwei diametral angeordneten Kammerwänden (26 bzw. 28) der beiden Bauteile (2 bzw. 4) eingespannt ist, wobei während der Herstellung der Verbindung zwischen den beiden Bauteilen (2, 4) der Abstand zwischen den beiden Kammerwänden (26, 28) reduziert worden ist.

5. Dichtungsanordnung nach einem der Ansprüche 1 bis 4, **dadurch gekennzeichnet, dass** bei der Herstellung der Verbindung zwischen den Bauteilen (2, 4) die Trennwand (34) derart verformt wurde, dass infolge einer Volumenänderung, bevorzugt einer Volumenreduzierung, des den ersten Dichtring (32) enthaltenden Kammerteils eine Verpressung des ersten Dichtringes (32) vorgegeben ist.

6. Dichtungsanordnung nach einem der Ansprüche 1 bis 5, **dadurch gekennzeichnet, dass** die Trennwand (34) als ein über den Umfang geschlossener Ring ausgebildet ist und eine Rippe (43) zur Aussteifung aufweist.

7. Dichtungsanordnung nach einem der Ansprüche 1 bis 6, **dadurch gekennzeichnet, dass** die Trennwand (34) mit bevorzugt ringförmigen Anlageflächen (44 bzw. 46) an den Kammerwänden (26 bzw. 28) der Bauteile (2 bzw. 4) anliegt und/oder dass die Trennwand (34) eine dem ersten Dichtring (32) zugewandte Spitze oder Abrundung (42) aufweist, welche insbesondere Bestandteil der Rippe (43) ist.

8. Dichtungsanordnung nach einem der Ansprüche 1 bis 7, **dadurch gekennzeichnet, dass** der erste Dichtring (32), die Trennwand (34) und der zweite Dichtring (36) ein vorgefertigtes Dichtelement (22) in Sandwich-Bauform bilden.

9. Dichtungsanordnung nach einem der Ansprüche 1 bis 8, **dadurch gekennzeichnet, dass** der mediumseitig angeordnete zweite Dichtring (36) vor dem Herstellen der Verbindung eine axiale Breite (40) aufweist, welche um einen vorgegebenen Betrag kleiner ist als die axiale Breite des ersten Dichtringes (32) und/oder der Trennwand (34).

10. Dichtungsanordnung nach einem der Ansprüche 1 bis 9, **dadurch gekennzeichnet, dass** die Bauteile (2, 4) Bestandteile eines Ventils, eines Hahnes oder einer Klappe sind.

## Claims

1. Sealing arrangement containing a first, radially outer sealing ring (32), a chamber (24) between two components (2,4) that may be connected to each other, which components contain an interior (5) through which a medium may flow, and which are preferably connected to each other via a flange connection, said sealing ring (32) being arranged in the chamber (24) under prestress, and also containing a partition (34), which is arranged in the chamber (24) in front of the first sealing ring (32), in the direction pointing away from the interior (5), and on the side of which partition that is remote from the interior (5), the first sealing ring (32) is supported, a second sealing ring (36), made of a soft sealing material, in particular PTFE, being arranged in front of the partition (34), in the direction pointing away from the interior (5), **characterised in that** the first, radially outer sealing ring (32) is made of a high-temperature sealing material, **in that**, as a result of the connection produced between the components (2, 4), the partition (34) is radially deformed such that the volume of the part of the chamber containing the first sealing ring (32) is altered by means of the partition (34), thus radially prestressing the first sealing ring (32), and **in that**, in the assembled state, the two sealing rings (32, 36) may be applied directly to the chamber walls (26, 28), which are located substantially in radial planes.

2. Sealing arrangement according to claim 1, **characterised in that** the partition (34) is substantially more rigid than the material of the first sealing ring (32), and /or is configured as a metal ring, the first sealing ring (32) being enclosed by means of the partition (34).

3. Sealing arrangement according to either claim 1 or claim 2, **characterised in that** the first sealing ring (32) is made of graphite.

4. Sealing arrangement according to any one of claims 1 to 3, **characterised in that** the partition (34) is clamped between two diametrically arranged chamber walls (26 and 28) of the two components (2 and 4), the distance between the two chamber walls (26, 28) having been reduced during the connection of the two components (2, 4).

5. Sealing arrangement according to any one of claims 1 to 4, **characterised in that** during the connection of the components (2, 4), the partition (34) was deformed such that, as a result of a change in volume, preferably a reduction in volume, of the part of the chamber containing the first sealing ring (32), the first sealing ring (32) is compressed.

6. Sealing arrangement according to any one of claims 1 to 5, **characterised in that** the partition (34) is configured as a circumferentially closed ring and comprises a rib (43) for imparting rigidity.

7. Sealing arrangement according to any one of claims 1 to 6, **characterised in that** the partition (34) abuts the chamber walls (26 and 28) of the components (2 and 4) with preferably annular bearing surfaces (44 and 46), and /or **in that** the partition (34) comprises a tip or rounding (42), which, in particular, is a component of the rib (43), and which faces the first sealing ring (32).

8. Sealing arrangement according to any one of claims 1 to 7, **characterised in that** the first sealing ring (32), the partition (34) and the second sealing ring (36) form a preformed sealing element (22) in a sandwich construction.

9. Sealing arrangement according to any one of claims 1 to 8, **characterised in that** before the connection, the second sealing ring (36), which is arranged on the middle side, has an axial width (40) that is smaller than the axial width of the first sealing ring (32) and /or of the partition (34) by a predetermined amount.

10. Sealing arrangement according to any one of claims 1 to 9, **characterised in that** the components (2, 4) are components of a valve, a cock or a flap.

## Revendications

1. Système d'étanchéité, contenant une première bague d'étanchéité (32) extérieure radialement, une chambre (24) entre deux pièces (2, 4) pouvant être reliées l'une à l'autre, qui contiennent un espace intérieur (5) pouvant être traversé par un fluide et qui sont reliées entre elles de préférence par une liaison par bride, ladite bague d'étanchéité (32) étant placée sous précontrainte dans la chambre (24), et contenant une cloison (34) qui est placée dans la chambre (24) avant la première bague d'étanchéité (32) dans la direction opposée à l'espace intérieur (5) et contre le côté opposé à l'espace intérieur (5) de laquelle s'appuie la première bague d'étanchéité (32), une deuxième bague d'étanchéité (36) dans un matériau d'étanchéité mou, en particulier du PTFE, étant placée avant la cloison (34) dans la direction opposée à l'espace intérieur (5), ***caractérisé en ce que*** la première bague d'étanchéité (32) radialement extérieure est constituée d'un matériau d'étanchéité à haute température, **en ce que** lors de l'établissement de la liaison entre les pièces (2, 4), la cloison (34) est déformée radialement de telle sorte que la partie de chambre contenant la première bague d'étanchéité (32) change également de volume au moyen de la cloison (34) et une précontrainte radiale (32) agit ainsi sur la première bague d'étanchéité (32), et ***en ce qu'*** à l'état monté, les deux bagues d'étanchéité (32, 36) peuvent se placer directement contre les parois de chambre (26, 28) situées sensiblement dans des plans radiaux.

2. Système d'étanchéité selon la revendication 1, ***caractérisé en ce que*** la cloison (34) présente une rigidité nettement plus grande que celle du matériau de la première bague d'étanchéité (32) et/ou est conformée en bague métallique, un enfermement de la première bague d'étanchéité (32) étant imposé au moyen de la cloison (34).

3. Système d'étanchéité selon la revendication 1 ou 2, ***caractérisé en ce que*** la première bague d'étanchéité (32) est en graphite.

4. Système d'étanchéité selon l'une des revendications 1 à 3, ***caractérisé en ce que*** la cloison (34) est serrée entre deux parois de chambre diamétrales (26, resp. 28) des deux pièces (2, resp. 4), la distance entre les deux parois de chambre (26, 28) étant réduite pendant l'établissement de la liaison entre les deux pièces (2, 4).

5. Système d'étanchéité selon l'une des revendications 1 à 4, ***caractérisé en ce que**,* lors de l'établissement de la liaison entre les pièces (2, 4), la cloison (34) a été déformée de telle manière que par suite d'une variation de volume, de préférence une réduction de volume, de la partie de chambre contenant la première bague d'étanchéité (32), une compression de la première bague d'étanchéité (32) est imposée.

6. Système d'étanchéité selon l'une des revendications 1 à 5, ***caractérisé en ce que*** la cloison (34) est conformée en bague fermée sur la circonférence et présente une membrure (43) pour la rigidité.

7. Système d'étanchéité selon l'une des revendications 1 à 6, ***caractérisé en ce que*** la cloison (34) s'appuie avec des surfaces d'appui (44, resp. 46) de préférence annulaires contre les parois de chambre (26, resp. 28) des pièces (2, resp. 4) et/ou **en ce que** la cloison (34) est une pointe ou un arrondi (42) tournée vers la première bague d'étanchéité (32) et qui fait en particulier partie de la membrure (43).

8. Système d'étanchéité selon l'une des revendications 1 à 7, ***caractérisé en ce que*** la première bague d'étanchéité (32), la cloison (34) et la deuxième bague d'étanchéité (36) forment un élément d'étanchéité préfabriqué (22) sous forme de sandwich.

9. Système d'étanchéité selon l'une des revendications 1 à 8, ***caractérisé en ce que*** la deuxième bague d'étanchéité (36) placée côté fluide présente avant l'établissement de la liaison une largeur axiale (40) qui est plus petite d'une quantité prédéterminée que la largeur axiale de la première bague d'étanchéité (32) et/ou de la cloison (34).

10. Système d'étanchéité selon l'une des revendications 1 à 9, ***caractérisé en ce que*** les pièces (2, 4) font partie d'une vanne, d'un robinet ou d'un clapet.
